# EUROPEAN PATENT SPECIFICATION

(11) **EP 4 230 100 B1**
(45) Date of publication and mention of the grant of the patent: **17.07.2024**
(21) Application number: 22382145.5
(22) Date of filing: 21.02.2022
(51) Int. Cl.: A47J 37/12, G07F 17/00

(54) **DISPENSER FOR FRYING MACHINES HAVING A SINGLE MOTOR**
SPENDER FÜR FRITTIERMASCHINEN, DER EINEN EINZIGEN MOTOR AUFWEIST
DISTRIBUTEUR POUR FRITEUSES AYANT UN MOTEUR UNIQUE

(43) Date of publication of application: 23.08.2023
(73) Proprietor: Qualityfry, S.L., 28037 Madrid (ES)
(72) Inventor: BERMEJO MARLASCA, Luís Carlos, E-28030 Madrid (ES); ALFARO TOMÁS, David, E-28521 Rivas, Madrid (ES); GUTIÉRREZ UREÑA, Luis Ismael, E-28037 Madrid (ES)
(74) Representative: ABG Intellectual Property Law, S.L.

(56) References cited:
- EP-A1- 3 324 373
- WO-A1-90/04346
- IT-A1- 201800 003 677
- US-A1- 2003 121 933

## Description

### OBJECT OF THE INVENTION

The present invention relates to a dispenser for dispensing one or more products into individual portions for the continuous feed of frying machines and to a frying machine comprising said dispenser.

In particular, the dispenser comprises a plurality of compartments in which individual portions of one or more different products in the same or different volumes/weights are introduced to continuously feed the fryer machine.

### BACKGROUND OF THE INVENTION

Fryers today have limitations when it comes to frying different products in a single fryer vat. This deficiency can be partially overcome by incorporating two fryer baskets in each vat allowing, in the best-case scenario, twice the amount of product or two different products to be fried simultaneously. This partial solution furthermore has the drawback that it requires an operator dedicated exclusively to controlling frying, thus increasing costs associated with the frying method. Another drawback is that in addition to possible human errors that may cause damage in the product and to the facilities, the operator is continuously exposed to burns, oil splashes, and other accidents while handling the fryer baskets.

Some solutions of the state of the art seek to overcome the limitations mentioned above, particularly by means of dispensing systems providing product to the fryer automatically. However, said solutions have important limitations that have yet to be addressed even today.

On one hand, fryers of this type comprise multiple mechanisms that increase their design complexity, thereby complicating their construction, repair, and cleaning. Accordingly, this design complexity also increases their sale price and maintenance and repair costs. On the other hand, the multiple mechanisms of the fryer considerably complicate maintaining the leak-tightness of the vat, causing bothersome fume leaks and unpleasant smells. Lastly, it should also be mentioned that the need for multiple mechanisms leads to a less reliable fryer. The document EP 3 324 373 A1 discloses a dispenser for dispensing product in individual portions for continuously feeding frying machines.

In view of the state of the art, a dispenser for continuously and automatically feeding frying machines that solves the problems mentioned above is therefore needed.

### DESCRIPTION OF THE INVENTION

The present invention proposes a solution to the problems mentioned above by means of a dispenser for the continuous feed of frying machines according to claim 1 and a frying machine according to claim 15. Preferred embodiments of the invention are defined in the dependent claims.

In a first inventive aspect, the invention provides a *dispenser for the continuous feed of frying machines comprising,*
- *a rotary hopper in turn comprising at least two sectors, each sector being configured for storing therein a product to be fried and comprising a first opening at the bottom thereof;*
- *an actuation area coupled to the hopper in a decouplable manner and configured for receiving a movement that causes the rotation of said hopper, the actuation area comprising at least two cavities vertically aligned with the openings of the at least two sectors of the hopper;*
- *a fixed plate located adjacent to the actuation area, the fixed plate comprising a first window,*
- *control means,*

*characterized in that it further comprises:*
   - *a rotary plate located adjacent to the fixed plate, the rotary plate being configured for receiving a movement that causes its rotation and comprising at least one second window;*
   - *an actuation system configured for rotating and connected to the control means, in turn comprising*
      ∘ a *first actuation mechanism configured for mechanically cooperating with the actuation area, and*
      ∘ a *second actuation mechanism configured for mechanically cooperating with the rotary plate, and*
*wherein the control means are configured for activating the actuation system by causing the rotation thereof in a first and in a second direction of rotation, such that,*
   *when rotation in the first direction of rotation is caused, the first actuation mechanism incites rotation of the actuation area and of the hopper; and*
   *when rotation in the second direction of rotation is caused, opposite the first direction of rotation, the second actuation mechanism incites rotation of the rotary plate; and wherein*
   *the rotations of the actuation area, of the hopper, and of the rotary plate allow the opening of one of the sectors of the hopper, one of the cavities of the actuation area, and one of the at least one second window of the rotary plate to be vertically aligned with the first window of the fixed plate* so as *to allow the product to be fried to go into free fall from said sector due to gravity.*

Throughout this document, an actuation system will be understood to mean a component which allows movement or energy to be transmitted to another component, for example, a motor, a pulley, bearings, gears, or a combination thereof.

Likewise, throughout the document, mechanically cooperating will be understood to mean two mechanically components being interrelated in order to transmit movement between said components, for example between a gear and a toothed surface.

Similarly, throughout the document, control means will be understood to mean an electric or electronic device which is configured for receiving inputs from the different elements making up the dispenser for feeding fried food, for example a microcontroller or a microprocessor.

Said inputs can be mechanical, such as a limit switch, and/or electrical, analog, or digital inputs, coming from a sensor or from an information input device which allows the user to interact with the dispenser in order to configure the parameters necessary for its correct operation, for example, speed of the actuation system, dispensing window alignment time, etc.

The control means will comprise the wiring needed for connecting to the different components of the dispenser for feeding frying machines and will be configured for generating an operating response and/or order based on the inputs received.

The hopper in turn comprises at least two storage sectors, each sector comprising an opening at the bottom thereof. The hopper is coupled to an actuation area, said actuation area being configured for receiving movement coming from another component, i.e., the actuation system. This transmission of movement is done through mechanical cooperation, resulting in a rotary movement of the actuation area and, therefore, of the hopper.

The actuation area comprises at least two cavities vertically aligned with the openings of the sectors of the hopper. Preferably, the openings of the sectors of the hopper and the cavities of the actuation area are substantially the same size.

The hopper is coupled to the actuation area in a decouplable manner, that is, both components can be separated from one another, which facilitates cleaning and repair of the dispenser. In a preferred embodiment, the coupling is performed by means of protruding tabs in the hopper configured for being introduced and fixed in corresponding grooves located in the actuation area. Advantageously, by exerting slight pressure, the tabs can be introduced in and taken out of the grooves to readily couple and decouple the hopper to/from the actuation area. Fixing by means of tabs furthermore entails the advantage of favor immovability between the hopper and the actuation area when the dispenser is in operation, which ensures the correct vertical alignment between the openings of the sectors of the hopper and the cavities of the actuation area.

In a preferred example, there is the same number of tabs and grooves as there are number of sectors of the hopper.

Adjacent to the actuation area there is a fixed plate comprising a first window, which his obviously stationary, configured for being aligned with the aforementioned openings and cavities during the rotary movement of the actuation area and, therefore, of the hopper. Thus, when the product has to fall from one of the sectors into the fryer, said product will go through one of the openings of a sector of the hopper, one of the cavities of the actuation area, and the first window of the fixed plate.

Adjacent to the fixed plate there is located a rotary plate configured for receiving movement coming from another component in mechanical cooperation, i.e., the actuation system. Said rotary plate comprises at least one second window. Throughout the document, solid area of the rotary plate will be understood to mean the part of said rotary plate other than the at least one second window.

The at least one second window will allow the free fall passage of the product to be fried when, during movement of the rotary plate, it is aligned with the opening of the bottom of one of the sections of the hopper, one of the cavities of the actuation area, and the first window located in the fixed plate. Likewise, the rotary plate will prevent the passage of the product to be fried when the movement thereof situates the second window or windows in a manner that is not aligned with the aforementioned opening, cavity, and first window. Throughout the document, the at least one second window will be understood as not being aligned with the rest of the openings, cavities, and windows when the solid area of the rotary plate completely prevents the passage of the product from the sectors of the hopper.

The rotary plate thereby acts like a rotating flap door, allowing or preventing passage of the product to be fried as a result of its rotation, and the hopper acts like a selector of said product to be fried, which corresponds with the product stored in the sector of the hopper that has been pre-selected.

Taking into account that the hopper has to be the element located at the greatest height for the product to free fall towards the fryer, the term "adjacent to" in this context is to be understood as meaning "below".

The dispenser further comprises an actuation system configured for rotating in a first direction of rotation and in a second direction of rotation, opposite the first direction. The actuation system in turn comprises a first actuation mechanism mechanically cooperating with the actuation area, inciting the latter to rotate and, consequently, the hopper as well; and a second actuation mechanism mechanically cooperating with the rotary plate, also inciting the rotation thereof.

This actuation system is activated and deactivated through control means, which incite rotation thereof in the two aforementioned opposite directions. In particular, when rotation in the first direction is caused, the first actuation mechanism will incite rotation of the actuation area and, therefore, of the hopper; and when rotation in the second direction is caused, it will incite movement of the rotary plate.

The combination of these two rotational movements opposite one another allow vertically aligning the opening of one of the sections of the hopper, one of the cavities of the actuation area, and one of the at least one second window of the rotary plate with the first window of the fixed plate such that the free fall of the product to be fried due to gravity is allowed.

One of the main advantages of the dispenser according to the first inventive aspect is that it automatically and continuously provides the product to be fried, which is precisely dispensed into individual portions, preventing dispensing errors and jams.

These functions are achieved by means of a single actuation system, which allows the number of necessary mechanisms and the complexity thereof to be limited, reducing machine size and weight, improving its reliability, and furthermore making cleaning and maintenance easier. Throughout the document, reliability of a system will be understood to mean the probability of said machine operating suitably for a given period of time and under specific operating conditions. Therefore, generally speaking, the more complex mechanisms a system comprises, the less reliable said system is because said mechanisms all have to work correctly at the same time.

A further advantage of the dispenser of the invention is that as a result of the control means, the user can program fried foods on standby to enter the fried food area by free fall in an orderly fashion. As mentioned, this occurs when the windows, openings, and cavities of the dispenser are vertically aligned.

Even more advantageously, the actuation system of this dispenser allows there to be insulation between the fried food area and the exterior. In other words, when the fried food area is in service, the dispenser cannot provide it with any more product, so there cannot be any vertical tunnel of windows, openings, and cavities which allow the passage of said product towards the fryer. To that end, the actuation system incites rotation of the rotary plate such that the at least one second window is not aligned with the rest of the windows, openings, and cavities, that is, said vertical tunnel is completely interrupted by the solid area of the rotary plate. Leak-tightness and insulation of the fried food area with respect to the exterior is thereby achieved, preventing unwanted fumes and smells from getting out.

In a particular embodiment:
- *the actuation system further comprises a rotating shaft;*
- *the first actuation mechanism comprises*
   ∘ a *first pinion configured for mechanically cooperating with the actuation area, and*
   ∘ a *first freehub bushing fitted in the first pinion and configured for being coupled to and decoupled from the rotating shaft, and*
- *the second actuation mechanism comprises*
   ∘ a *second pinion configured for mechanically cooperating with the rotary plate, and*
   ∘ a *second freehub bushing fitted in the second pinion and configured for being coupled to and decoupled from the rotating shaft; and wherein*

*when the actuation system rotates in the first direction of rotation,*
   *the rotating shaft rotates in the first direction of rotation,*
   *the first freehub bushing is coupled to the rotating shaft, allowing rotation of the first pinion, which in turn rotates the actuation area coupled to the hopper, and*
   *the second freehub bushing is decoupled from the rotating shaft preventing rotation of the second pinion, and*
*when the actuation system rotates in the second direction of rotation,*
   *the rotating shaft rotates in the second direction of rotation,*
   *the first freehub bushing is decoupled from the rotating shaft preventing rotation of the first pinion and*
   *the second freehub bushing is coupled to the rotating shaft allowing rotation of the second pinion which in turn rotates the rotary plate.*

In this particular embodiment, the first and second actuation mechanisms of the actuation system each comprise a pinion and a freehub bushing. Both mechanisms are assembled on one and the same rotating shaft configured for rotating in first and second directions of rotation opposite one another.

Throughout the description, a shaft and a pinion will be understood as being mechanical elements which can be coupled and decoupled through a freehub bushing. Said freehub bushing is fitted in the pinion such that if the bushing is coupled to the shaft, the pinion is also coupled to the shaft, and they rotate at the same time. In contrast, if the bushing is decoupled from the shaft, the pinion is libre and the shaft continues rotating without transmitting movement to the pinion. The pinion must be understood as being an element with teeth on the edge, preferably a wheel, which meshes with another element having the same or a different size or with a chain to transmit movement to said other element.

When the actuation system rotates in the first direction, the rotating shaft rotates in said direction. In turn, the first freehub bushing allows movement of the first pinion by being coupled to the rotating shaft; said first pinion in turn mechanically cooperates with the actuation area, therefore rotating the hopper. Moreover, the second freehub bushing is decoupled from the rotating shaft, leaving the second pinion free and stationary while the rotating shaft continues to rotate in the first direction of rotation.

In contrast, when the actuation system rotates in the second direction, the rotating shaft rotates in said second direction. In turn, the second freehub bushing allows rotation of the second pinion by being coupled to the rotating shaft and said second pinion in turn mechanically cooperates with the rotary plate, to which it will transmit its movement. Moreover, the hopper will remain stopped because the first freehub bushing is decoupled from the shaft, preventing rotation of the first pinion.

The pinion and freehub bushing combination advantageously allows the first and second actuation mechanisms to be assembled on a single rotating shaft and moved selectively depending on the direction of rotation of said shaft. As a result, by means of a single actuation system it is possible to move, independently, the hopper, by means of the actuation area, and the rotary plate, decreasing the number of mechanical mechanisms of the dispenser and thus allowing the size and weight thereof to be minimized, increasing its reliability and reducing maintenance costs.

In a particular embodiment, the dispenser *further comprises a casing configured and sized for housing the first actuation mechanism, the second actuation mechanism, the rotary plate, the fixed plate and, partially, the actuation area; the casing comprising a base in turn comprising a third window vertically aligned with the first window of the fixed plate.*

This embodiment contemplates a cover that protects some of the elements of the dispenser participating in rotary movements. On one hand, the casing comprises a compartment in which the first actuation mechanism and the second actuation mechanism are housed, and a main body in turn comprising a base with a window vertically aligned with the first window of the fixed plate, and at least one wall surrounding and protecting the rotary and fixed plates and, partially, the actuation area.

Advantageously, the casing prevents unwanted elements or dirt from getting between the rotary plate, the fixed plate, the actuation area, and the first and second actuation mechanisms. Obstructions in the gears are thereby obstructed, dispenser cleaning tasks are made easier, machine maintenance is minimized, and possible accidents are prevented.

In a particular embodiment, *the dimensions of the openings of the at least two sectors of the hopper, the at least two cavities of the actuation area, the first window of the fixed plate, the second window of the rotary plate and, if there is one, the third window of the casing are substantially the same.*

The main advantage of this particular embodiment resides in the formation of a vertical tunnel the inner perimeter of which is formed by substantially uniform and smooth walls when the opening of the bottom of a section of the hopper, a cavity of the actuation area, the first window, the second window and, if there is one, the third window, are aligned. This configuration optimizes the passage of the product to be fried towards the vat of the fryer in free fall due to gravity, eliminating protrusions, irregularities, or sharp pointed edges where the product may become lodged, and therefore achieving a more precise dispensing of said product to be fried.

Furthermore, this vertical tunnel prevents the product from getting trapped between different parts of the dispenser, which may hinder rotations and would require more thorough and more costly machine maintenance and cleaning. Furthermore, by preventing improper dispenser operation due to the accumulation of dirt, reliability thereof also increases.

In a particular embodiment, the dispenser *further comprises at least one position sensor for the correct vertical alignment of an opening of one of the sectors of the hopper and of the second window of the rotary plate with the first window of the fixed plate.*

Advantageously, the position sensor ensures that the sector of the hopper, together with the corresponding cavity of the actuation area, and the second window of the rotary plate are precisely aligned with the first stationary window of the fixed plate. Therefore, falling of the product to be fried due to gravity occurs correctly, preventing the product from being jammed between components of the dispenser and hindering correct rotation of its rotary elements. Consequently, it increases the reliability of the dispenser, and dispenser maintenance and cleaning tasks are easier and associated costs lower.

In a particular embodiment, *the at least one position sensor is located:*
- *in at least one of the at least two sectors of the hopper; and*/*or*
- *in the vicinity of the at least one second window of the rotary plate.*

Advantageously, in this particular embodiment, the position sensor is located in a sector of the hopper where one of the at least two sectors of the hopper is located and/or close to the at least one second window of the rotary plate such that greater fitting precision thereof is ensured when vertically aligned. Additionally, the sensor in the at least one second window of the rotary plate, if there is one, also allows knowing whether or not the solid area of said rotary plate is blocking the vertical fall of the product from the hopper, which allows ensuring the leak-tightness of the vat of the fryer and assuring that no unwanted fumes or smells are expelled.

In a particular embodiment, *the number of second windows of the rotary plate is equal to half the number of sectors of the hopper.*

Advantageously, in this particular embodiment, the available space in the dispenser is optimized for the necessary rotation to close off or open up passage for the product to be fried to be minimal, thus favoring speed in dispensing the product to be fried in addition to energy savings, and minimization of the wear of mechanically cooperating components of the dispenser to achieve said movement.

In a preferred embodiment, the dispenser comprises two second windows in the rotary plate and four sectors in the hopper.

In a particular embodiment,
*the hopper comprises a cylindrical base, and*
*the actuation area, the fixed plate, the rotary plate and, if there is one, the base of the casing, are circular; the diameter of said plates and said base of the casing being substantially equal to the diameter of the cylindrical base of the hopper.*

Advantageously, the cylindrical shape of the hopper and the circular shape of the actuation area, the fixed and rotary plates and, if there is one, the base of the casing, brings about the correct fitting and facilitates the rotary movement thereof about a central rotating shaft.

The circular plates and the actuation area preferably comprise a central hole sized and configured for fitting with a central protrusion of the base of the casing, such that said central protrusion acts like a central rotating shaft of the rotary plate and the actuation area. Advantageously, this central protrusion prevents relative movement between these elements of the dispenser, which favors correct alignment of the cavity of the actuation area and the first, second, and third windows.

In a particular embodiment, *the actuation area of the hopper is a circular plate having a toothed perimeter.*

Advantageously, this configuration of the actuation area allows said area to mechanically cooperate in a simple manner with toothed components, for example gears or other types of toothed wheels, without the need to add intermediate adapting components.

Furthermore, the toothed area advantageously allows a good and efficient way to transmit the movement that the first actuation means must transmit to the hopper.

In a particular embodiment, *the perimeter of the rotary plate is toothed.*

This particular embodiment has the advantages of allowing the mechanical cooperation of the rotary plate with other toothed components in a simple manner, without the need for intermediate adapters. Furthermore, it is a good and efficient way to transmit the movement that the second actuation means must impart to the rotary plate.

In a particular embodiment, *at least one of the sectors of the hopper comprises at least one load cell connected to the control means, the control means further being configured for detecting, while the actuation system is activated, whether the weight of the content in said sector of the hopper decreases by an amount equal to or greater than a first given weight, in which case the control means deactivate the actuation system.*

This embodiment provides the advantage of precisely controlling the weight of the product to be fried automatically dispensed by each section of the hopper, without the need for an operator to interact with same, increasing process efficiency and productivity. In particular, the control means stop rotation in any of the directions of the actuation system when detecting that the amount of product of a sector is not enough to cover the needs of a given product portion.

In a particular embodiment, *the hopper is a refrigerated hopper.*

In this embodiment, the hopper is refrigerated, which provides the advantage of maintaining the optimal storage temperature of the product, preserving its properties until it is fried. For example, it can keep a product frozen until said product is dispensed, without breaking the cold chain.

In a particular embodiment, *each sector of the hopper comprises a maximum volume of product to be fried, said volume being substantially the same for all the sectors.*

This embodiment allows individual product portions of the same volume to be stored such that continuous and uniform dispensing of said product can be automated. Advantageously, substantial uniformity in terms of the product offered to the consumer per portion is achieved.

In a particular embodiment, *the actuation system comprises an electric motor.*

Advantageously, this embodiment allows all the rotary components of the dispenser to be moved with a single motor; that is, the motor rotates the actuation area and, therefore, the hopper and the rotary plate. As a result of this component simplicity, dispenser reliability increases, the size and weight thereof are minimized, assembly and maintenance tasks are easier, and furthermore, the costs associated with these tasks are reduced.

In a second inventive aspect, the invention provides a *frying machine comprising* a *dispenser for the continuous feed of frying machines according to the first inventive aspect.*

The frying machine according to the second inventive aspect allows the process of frying individual portions of the same product or several different products stored in each sector of the hopper to be automated, preventing the intervention of operators controlling the amount of product to be fried, the dispensing, and the frying of said product. Process efficiency and operator safety are thereby increased. Advantageously, an automated frying process which, in addition to increasing operator safety, is more efficient and precise is achieved.

This frying method is achieved as a result of a dispenser with a single actuation system, which allows the number of necessary mechanisms and the complexity thereof to be limited, reducing machine size and weight, improving its reliability and furthermore facilitating cleaning and maintenance.

A further advantage is that as a result of the control means of the machine, operators can program fried foods on standby to enter the fried food area by free fall in an orderly fashion. As mentioned, this occurs when the windows, openings, and cavities of the dispenser are vertically aligned.

Even more advantageously, the rotary system of the dispenser of the machine allows there to be insulation between the fried food area and the exterior, thereby preventing unwanted fumes and smells from getting out.

All the features described in this specification (including the claims, description, and drawings) can be combined in any combination, with the exception of such mutually exclusive features.

### DESCRIPTION OF THE DRAWINGS

These and other features and advantages of the invention will become more apparent from the following detailed description of a preferred embodiment, given solely by way of non-limiting, illustrative example in reference to the attached figures.
Figure 1 shows an exploded view of a dispenser for frying machines having a single motor according to an embodiment of the present invention.
Figure 2 shows a non-exploded perspective view of the dispenser for frying machines having a single motor of Figure 1.
Figure 3 shows a perspective view of a dispenser for frying machines having a single motor according to an exemplary embodiment, showing the first and second activation mechanisms and their respective directions of rotation.
Figure 4 shows a front view of the dispenser for frying machines having a single motor of Figure 3.
Figure 5 shows a front view of a frying machine comprising a dispenser having a single motor according to an exemplary embodiment of the present invention.

### DETAILED DISCLOSURE OF THE INVENTION

### Dispenser for frying machines having a single motor

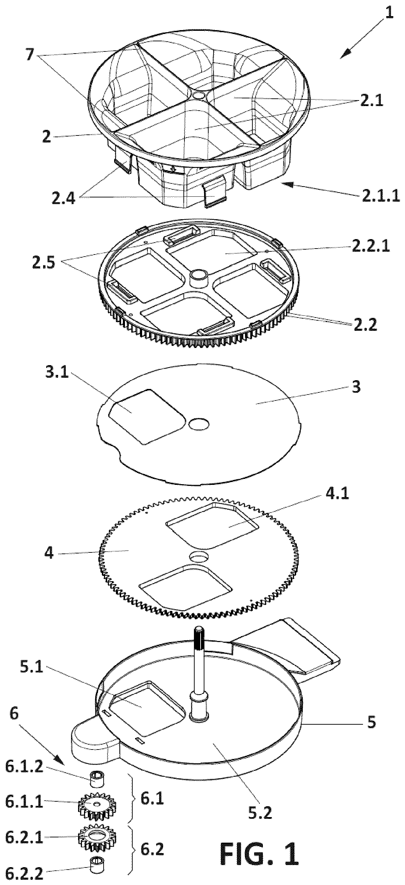

Figure 1 shows an exploded view of the dispenser (1) for the continuous feed of frying machines according to an exemplary embodiment of the present invention.

The dispenser (1) comprises a rotary hopper (2), an actuation area (2.2) coupled to the hopper, a fixed plate (3), control means (not depicted in Figure 1), a rotary plate (4), a protective casing (5), and an actuation system (6) configured for transmitting movement to the actuation area (2.2), and therefore to the hopper (2), and to the rotary plate (4). The coupling of the hopper (2) and the actuation area (2.2) is not fixed but rather both components can be separated from one another.

In this exemplary embodiment, the hopper (2) has a base having a circular section and 4 sectors (2.1) configured for storing a maximum volume of product therein. Each sector (2.1) has a lower opening (2.1.1) which allows the product to exit by free fall. The actuation area (2.2), also having a base having a circular section with a diameter similar to that of the hopper (2), comprises 4 cavities (2.2.1) having a size and shape substantially the same as the openings (2.1.1) of the sectors (2.1) of the hopper (2). When the actuation area (2.2) is coupled to the hopper (2), these cavities (2.2.1) are vertically aligned with the openings (2.1.1) forming a vertical tunnel through which the product to be fried stored in the sectors (2.1) of the hopper (2) can be dispensed by free fall.

Optionally, the hopper (2) is refrigerated.

In alternative embodiments, the number of cavities (2.2.1) and of openings (2.1.1) is a number other than four, preferably having the same number of both.

The coupling of the hopper (2) and the actuation area (2.2) is preferably carried out by means of the fitting of a plurality of protruding tabs (2.4) arranged in the hopper (2) and a plurality of corresponding grooves (2.5) arranged in the actuation area (2.2). These grooves (2.5) are configured and sized for housing said tabs (2.4) protrusions and fixing the hopper (2) to the actuation area (2.2). In a preferred embodiment, there is the same number of tabs (2.4) and grooves (2.5) as there are number of sectors (2.1.1) of the hopper (2). Additionally or alternatively, the actuation area (1.3) comprises a central protrusion configured and sized for receiving a corresponding central groove housed in the hopper.

In this example, the aforementioned actuation area (2.2) has a toothed perimeter configured for receiving a movement that causes the rotation of said hopper (2). As mentioned, the movement is imparted to the actuation area (2.2) by the actuation system (6).

After the hopper (2) and the actuation area (2.2) there is located the fixed plate (3), comprising a first window (3.1) having a size and shape substantially the same as the openings (2.1.1) of the sectors (2.1) of the hopper (2) and the cavities (2.2.1) of the actuation area (2.2). Said first window (3.1) is fixed in a position which allows the openings (2.1.1) and the cavities (2.2.1) to be vertically aligned as a result of the rotation of the actuation area (2.2) and, therefore, of the hopper (2), thereby creating a vertical tunnel through which the product stored in the sectors (2.1) of the hopper can be dispensed by free fall.

Preferably, the fixed plate (3) is circular, having a diameter substantially equal to the base of the hopper (2) and the actuation area (2.2).

After the fixed plate (3) there is located a rotary plate (4) configured for receiving a movement that causes its rotation, this fixed plate (3) comprising at least one second window (4.1) having a size and shape substantially equal to those of the openings (2.1.1), the cavities (2.2.1), and the first window (3.1). Said second window (4.1) is configured for being vertically aligned with same (2.1.1, 2.2.1, and 3.1) due to the movement of the rotary plate (4), allowing passage of the product to be fried by free fall.

Preferably, the rotary plate (4) is circular, having a diameter substantially equal to the diameter of the base of the hopper (2), the actuation area (2.2), and the fixed plate (3). Furthermore, the number of second windows (4.1) is equal to half the sectors (2.1) of the hopper (2), in this case two, and the rotary plate has a toothed perimeter configured for receiving a movement that causes its rotation. As mentioned, the movement of the rotary plate (4) is imparted by the actuation system (6).

As stated above, the dispenser also comprises an actuation system (6) in turn comprising a first actuation mechanism (6.1) to provide rotary movement to the actuation area (2.1) and a second actuation mechanism (6.2) to provide rotary movement to the rotary plate (4). The actuation system (6) is governed by the control means.

In the exemplary embodiment of Figure 1, the first actuation mechanism (6.1) comprises a first pinion (6.1.1) and a first freehub bushing (6.1.2), whereas the second actuation mechanism (6.2) comprises a second pinion (6.2.1) and a second freehub bushing (6.2.2).

Both actuation mechanisms (6.1, 6.2) are assembled on one and the same rotating shaft (not shown in the figures) configured for rotating in a first direction of rotation and a second direction of rotation, opposite one another. The rotary movement is transmitted to the shaft by a single motor, preferably an electric motor. The first pinion (6.1.1) is interconnected with the actuation area (2.2) for mechanically cooperating with same, causing a rotary movement of the hopper (2) in a first direction of rotation when so ordered by the control means. The second pinion (6.2.1) is in turn interconnected with the toothed perimeter of the rotary plate (4) for mechanically cooperating with same, causing a rotary movement of said rotary plate (4) in a second direction of rotation when so ordered by the control means.

When the actuation system (6) rotates in the first direction of rotation, the first freehub bushing (6.1.2) is coupled to the rotating shaft allowing rotation of the first pinion (6.1.1), which rotates the actuation area (2.2) and, therefore, the hopper (2); at the same time, the second freehub bushing (6.2.2) is decoupled from the rotating shaft preventing rotation of the second pinion (6.2.1), keeping the rotary plate (4) stationary. When the actuation system (6) rotates in the second direction of rotation, the second freehub bushing (6.2.2) is coupled to the rotating shaft allowing rotation of the second pinion (6.2.1), which rotates the rotary plate (4); at the same time, the first freehub bushing (6.2.1) is decoupled from the rotating shaft preventing rotation of the first pinion (6.1.1), keeping the hopper (2) stationary.

The configuration of the actuation system (6) allows two rotational movements in opposite directions to be produced with a single motor, and a different mechanism to be actuated with each of said movements.

The rotation in a first direction causes movement of the hopper (2) to select the sector (2.1) the product of which must be dispensed by free fall so it can be fried. Rotation in the second direction causes movement of the rotary plate (4), which will act like a flap door to open or close the passage of the product by free fall towards the vat of a fryer machine depending on the position of its at least one second window (4.1).

In this embodiment of the invention, as shown in Figure 1, the dispenser further comprises a protective casing (5). On one hand, the casing (5) comprises a compartment for covering the first actuation mechanism (6.1) and the second actuation mechanism (6.2), and on the other hand, the casing (5) comprises a main body in turn comprising a base (5.2) with a third window (5.1) vertically aligned with the first window (3.1) of the fixed plate (3) and a cylindrical wall surrounding and protecting the rotary plate (4), the fixed plate (3) and, partially, the actuation area (2.2). Preferably, the third window (5.1) has dimensions substantially equal to the openings (2.1.1) of the sectors (2.1) of the hopper, the cavities (2.2.1) of the actuation area (2.2), and the first and second windows (3.1, 4.1).

Preferably, the circular plates (3, 4) and the actuation area (2.1) comprise a central hole sized and configured for fitting in a central protrusion of the base (5.2) of the casing, such that said central protrusion acts like a central rotating shaft of the rotary plate (4) and the actuation area (2.1). Advantageously, this central protrusion prevents relative movement between these elements (3, 4, 2.1) of the dispenser, which favors the correct alignment of the cavity (2.2.1) of the actuation area (2.2) and the first, second, and third windows (3.1, 4.1, 5.1).

Lastly, it should be mentioned that in order to cause product dispensing, the opening (2.1.1) of one of the sectors (2.1) of the hopper (2), the corresponding cavity (2.2.1) of the actuation area (2.2), the first window (3.1) arranged in the fixed plate (3), the third window (5.1) arranged in the protective casing (5), and one of the second windows (4.1) of the rotary plate (4) must be vertically aligned. Said first and third windows (3.1, 5.1) remain fixed, whereas the second window (4.1) of the rotary plate (4), as mentioned, may or may not be aligned with the rest depending on its position during rotary movement of the rotary plate (4).

The rotary plate (4) thereby acts like flap door allowing the passage of the product to be fried by aligning one of its second windows (4.1) with the opening (2.1.1) of the sector (2.1) the product of which is to be fried at that time, its corresponding cavity (2.2.1) in the actuation area (2.2), the first window (3.1) of the fixed plate (3), and the third window (5.1) of the protective casing (5), which form a tunnel for dispensing the product to be fried; or prevents the passage of the product when one of said second windows (4.1) is not vertically aligned in the tunnel configured for dispensing the product, since the solid area of the rotary plate (4) itself prevents its passage.

The dispenser (1) optionally comprises at least one position sensor (7) for the correct vertical alignment of an opening (2.1.1) of one of the sectors (2.1) of the hopper (2) and of the second window (4.1) of the rotary plate (4) with the first window (3.1) of the fixed plate (3). The at least one position sensor (7) is preferably located in at least one of the at least two sectors (2.1) of the hopper (2) and/or in the vicinity of the at least one second window (4.1) of the rotary plate (4).

At least one of the sectors (2.1) of the hopper (2) optionally comprises at least one load cell (not shown in Figure 1) connected to the control means, the control means further being configured for detecting, while the actuation system (6) is activated, whether the weight of the content in said sector (3) of the hopper (2) decreases by an amount equal to or greater than a first given weight, in which case the control means deactivate the actuation system (6).

Each sector (2.1) of the hopper (2) optionally comprises a maximum volume of product to be fried, said volume being substantially the same for all the sectors (2.1).

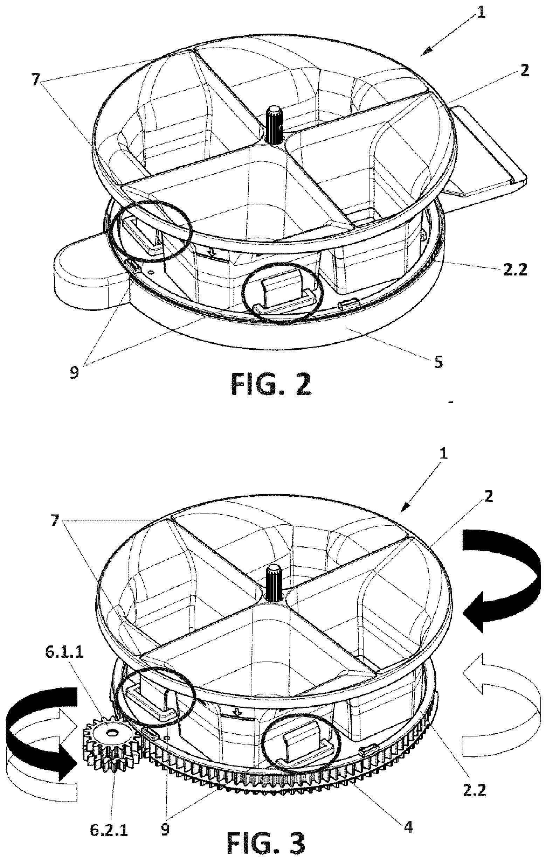

Figure 2 shows a non-exploded perspective view of the exemplary embodiment of the dispenser (1) for frying machines having a single motor of Figure 1.

The dispenser (1) with all its components arranged in a single block, included the protective casing (5) holding the first actuation mechanism (6.1), the second actuation mechanism (6.2), the rotary plate (4), the fixed plate (3), and part of the actuation area (2.2) can be observed in this example. The coupling (9) between the protruding tabs (2.4) arranged in the hopper (2) and the grooves (2.5) arranged in the actuation area (2.2), which allow both components to be coupled together, can furthermore be observed in this perspective view.

Figure 3 shows an exemplary embodiment of the invention without the protective casing (5).

The first actuation mechanism (6.1), the second actuation mechanism (6.2), the rotary plate (4), the fixed plate (3), the actuation area (2.2), and the hopper (2) can be observed in this example perfectly aligned. It also indicates the direction of rotation of the first pinion (6.1.1), which rotates in the counterclockwise direction in this case, causing the hopper (2) to rotate in the clockwise direction; and the direction of rotation of the second pinion (6.2.1), which rotates in the direction opposite the first pinion (6.1.1), in this case in the clockwise direction, causing the rotary plate (4) to rotate in the counterclockwise direction.

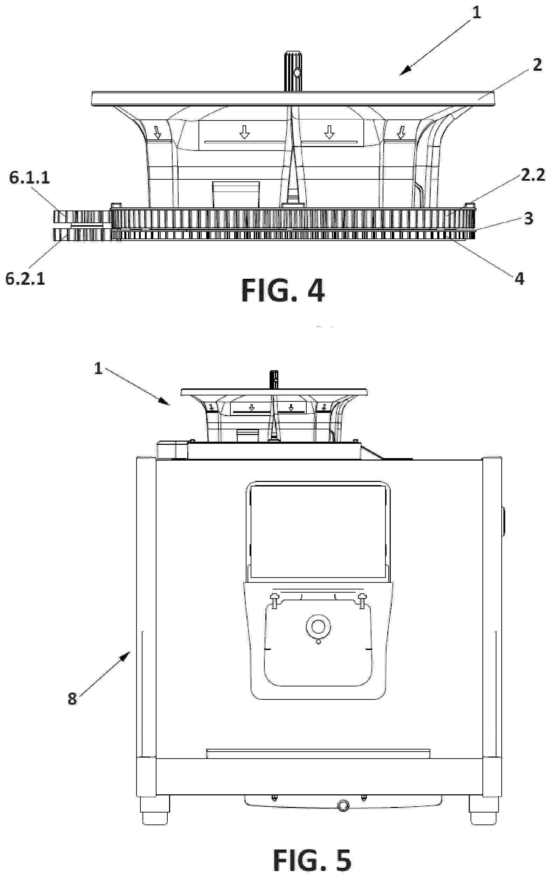

Figure 4 shows a front view of the dispenser (4) of Figure 3.

First, it is possible to observe with greater clarity the interconnection between the first pinion (6.1.1) and the toothed perimeter of the actuation area (2.2), which, due to mechanical cooperation, causes rotation of the hopper (2), which is located in the upper part of the assembly of the dispenser (1) shown in Figure 4. Furthermore, it is also possible to observe in said Figure 4 the interconnection between the second pinion (6.2.1) and the rotary plate (4), located under the fixed plate (3) in the lower area of the assembly of the dispenser (1), causing the rotation thereof due to mechanical cooperation.

Lastly, it is also possible to observe in said Figure 4 the coupling (9) of the protruding tabs (2.4) of the hopper (2) with the grooves (2.5) of the actuation area (2.1), which allows said hopper (2) to be fixed to said actuation area (2.2).

### Frying machine

Figure 5 shows a front view of a frying machine (8) according to an exemplary embodiment of the invention in which there is assembled the dispenser (1) with a single motor described in any of the preceding embodiments.

The frying machine (8) further comprises a touch screen connected to the control means of the dispenser controlling the actuation system (6). An operator can advantageously control the parameters of the frying machine (8) and of the dispenser (1) itself through the touch screen. The touch screen also allows the operating parameters of the frying machine (8) and of the dispenser (1) to be displayed, and the number and type of individual portions to be fried by the frying machine (8) coming from the corresponding sectors (2.1) of the hopper (2) to be programmed.

## Claims

1. Dispenser (1) for the continuous feed of frying machines comprising,
- a rotary hopper (2) in turn comprising at least two sectors (2.1), each sector (2.1) being configured for storing therein a product to be fried and comprising a first opening (2.1.1) at the bottom thereof;
- an actuation area (2.2) coupled to the hopper (2) in a decouplable manner and configured for receiving a movement that causes the rotation of said hopper (2), the actuation area (2.2) comprising at least two cavities (2.2.1) vertically aligned with the openings (2.1.1) of the at least two sectors (2.1) of the hopper (2);
- a fixed plate (3) located adjacent to the actuation area (2.2), the fixed plate (3) comprising a first window (3.1),
- control means,
**characterized in that** it further comprises:
- a rotary plate (4) located adjacent to the fixed plate (3), the rotary plate (4) being configured for receiving a movement that causes its rotation and comprising at least one second window (4.1);
- an actuation system (6) configured for rotating and connected to the control means, which in turn comprise
∘ a first actuation mechanism (6.1) configured for mechanically cooperating with the actuation area (2.2), and
∘ a second actuation mechanism (6.2) configured for mechanically cooperating with the rotary plate (4), and
wherein the control means are configured for activating the actuation system (6) by causing the rotation thereof in a first and in a second direction of rotation, such that,
when rotation in the first direction of rotation is caused, the first actuation mechanism (6.1) incites rotation of the actuation area (2.1) and of the hopper (2); and
when rotation in the second direction of rotation is caused, opposite the first direction of rotation, the second actuation mechanism (6.2) incites rotation of the rotary plate (4); and wherein
the rotations of the actuation area (2.2), of the hopper (2), and of the rotary plate (4) allow the opening (2.1.1) of one of the sectors (2.1) of the hopper (2), one of the cavities (2.2.1) of the actuation area (2.2), and one of the at least one second window (4.1) of the rotary plate (4) to be vertically aligned with the first window of the fixed plate (3) so as to allow the product to be fried to go into free fall from said sector (2.1) due to gravity.

2. The dispenser (1) according to claim 1, wherein
the actuation system (6) further comprises a rotating shaft;
the first actuation mechanism (6.1) comprises
a first pinion (6.1.1) configured for mechanically cooperating with the actuation area (2.2), and
a first freehub bushing (6.1.2) fitted in the first pinion (6.1.1) and configured for being coupled to and decoupled from the rotating shaft, and
the second actuation mechanism (6.2) comprises
a second pinion (6.2.1) configured for mechanically cooperating with the rotary plate (4), and
a second freehub bushing (6.2.2) fitted in the second pinion (6.2.1) and configured for being coupled to and decoupled from the rotating shaft; and wherein
when the actuation system (6) rotates in the first direction of rotation,
the rotating shaft rotates in the first direction of rotation,
the first freehub bushing (6.1.2) is coupled to the rotating shaft, allowing rotation of the first pinion (6.1.1), which in turn rotates the actuation area (2.2) coupled to the hopper (2), and
the second freehub bushing (6.2.2) is decoupled from the rotating shaft preventing rotation of the second pinion (6.2.1), and
when the actuation system (6) rotates in the second direction of rotation,
the rotating shaft rotates in the second direction of rotation,
the first freehub bushing (6.1.2) is decoupled from the rotating shaft preventing rotation of the first pinion (6.1.1), and
the second freehub bushing (6.2.2) is coupled to the rotating shaft allowing rotation of the second pinion (6.2.1) which in turn rotates the rotary plate (4).

3. The dispenser (1) according to any of the preceding claims further comprising a casing (5) configured and sized for housing the first actuation mechanism (6.1), the second actuation mechanism (6.2), the rotary plate (4), the fixed plate (3), and, partially, the actuation area (2.2); the casing (5) comprising a base (5.2) which in turn comprises a third window (5.1) vertically aligned with the first window (3.1) of the fixed plate (3).

4. The dispenser (1) according to any of the preceding claims, wherein the dimensions of the openings (2.1.1) of the at least two sectors (2.1) of the hopper (2), the at least two cavities (2.2.1) of the actuation area (2.2), the first window (3.1) of the fixed plate (3), the second window (4.1) of the rotary plate (4) and, if there is one, the third window (5.1) of the casing (5) are substantially the same.

5. The dispenser (1) according to any of the preceding claims, further comprising at least one position sensor (7) for the correct vertical alignment of an opening (2.1.1) of one of the sectors (2.1) of the hopper (2) and of the second window (4.1) of the rotary plate (4) with the first window (3.1) of the fixed plate (3).

6. The dispenser (1) according to the preceding claim, wherein the at least one position sensor (7) is located:
- in at least one of the at least two sectors (2.1) of the hopper (2); and/or
- in the vicinity of the at least one second window (4.1) of the rotary plate (4).

7. The dispenser (1) according to any of the preceding claims, wherein the number of second windows (4.1) of the rotary plate (4) is equal to half the number of sectors (2.1) of the hopper (2).

8. The dispenser (1) according to any of the preceding claims, wherein
the hopper (2) comprises a cylindrical base, and
the actuation area (2.2), the fixed plate (3), the rotary plate (4) and, if there is one, the base (5.2) of the casing (5), are circular; the diameter of said plates (3, 4) and said base (5.2) of the casing (5) being substantially equal to the diameter of the cylindrical base of the hopper (2).

9. The dispenser (1) according to any of the preceding claims, wherein the actuation area (2.2) of the hopper (2) is a circular plate having a toothed perimeter.

10. The dispenser (1) according to any of the preceding claims, wherein the perimeter of the rotary plate (4) is toothed.

11. The dispenser (1) according to any of the preceding claims, wherein at least one of the sectors (2.1) of the hopper (2) comprises at least one load cell connected to the control means, the control means further being configured for detecting, while the actuation system (6) is activated, whether the weight of the content in said sector (3) of the hopper (2) decreases by an amount equal to or greater than a first given weight, in which case the control means deactivate the actuation system (6).

12. The dispenser (1) according to any of the preceding claims, wherein the hopper (2) is a refrigerated hopper.

13. The dispenser (1) according to any of the preceding claims, wherein each sector (2.1) of the hopper (2) comprises a maximum volume of product to be fried, said volume being substantially the same for all the sectors (2.1).

14. The dispenser (1) according to any of the preceding claims, wherein the actuation system (6) comprises an electric motor.

15. A frying machine (8) comprising a dispenser (1) for the continuous feed of frying machines according to any of claims 1 to 14.

## Patentansprüche

1. Spender (1) für die kontinuierliche Beschickung von Frittiermaschinen, umfassend,
- einen Drehrichter (2), der wiederum mindestens zwei Sektoren (2.1) umfasst, wobei jeder Sektor (2.1) dazu konfiguriert ist, ein zu frittierendes Produkt darin zu speichern, und eine erste Öffnung (2.1.1) an seinem Boden umfasst,
- ein Antriebsgebiet (2.2), das mit dem Trichter (2) in entkoppelbarer Weise gekoppelt und dazu konfiguriert ist, eine Bewegung zu empfangen, die die Rotation des Trichters (2) veranlasst, wobei das Antriebsgebiet (2.2) mindestens zwei Hohlräume (2.2.1) umfasst, die vertikal mit den Öffnungen (2.1.1) der mindestens zwei Sektoren (2.1) des Trichters (2) ausgerichtet sind,
- einen festen Teller (3), der benachbart zu dem Antriebsgebiet (2.2) angeordnet ist, wobei der feste Teller (3) ein erstes Fenster (3.1) umfasst,
- Steuermittel,
**dadurch gekennzeichnet, dass** es ferner umfasst:
- einen Drehteller (4), der benachbart zu dem festen Teller (3) angeordnet ist, wobei der Drehteller (4) dazu konfiguriert ist, eine Bewegung zu empfangen, die ihre Rotation veranlasst, und mindestens ein zweites Fenster (4.1) umfasst,
- ein Antriebssystem (6), das zum Rotieren konfiguriert ist und mit den Steuermitteln verbunden ist, die ihrerseits umfassen
o einen ersten Antriebsmechanismus (6.1), der dazu konfiguriert ist, mechanisch mit dem Antriebsgebiet (2.2) zusammenzuwirken, und
o einen zweiten Antriebsmechanismus (6.2), der dazu konfiguriert ist, mechanisch mit dem Drehteller (4) zusammenzuwirken, und
wobei die Steuermittel dazu konfiguriert sind, das Antriebssystem (6) zu aktivieren, indem sie dessen Rotation in einer ersten und in einer zweiten Rotationsrichtung veranlassen, derart, dass,
wenn Rotation in der ersten Rotationsrichtung veranlasst wird, der erste Antriebsmechanismus (6.1) Rotation des Antriebsgebiets (2.1) und des Trichters (2) auslöst; und
wenn Rotation in der zweiten Rotationsrichtung veranlasst wird, entgegengesetzt der ersten Rotationsrichtung, der zweite Antriebsmechanismus (6.2) Rotation des Drehtellers (4) auslöst; und wobei
die Rotationen des Antriebsgebiets (2.2), des Trichters (2) und des Drehtellers (4) es der Öffnung (2.1.1) eines der Sektoren (2.1) des Trichters (2), eines der Hohlräume (2.2.1) des Antriebsgebiets (2. 2) und eines des mindestens einen zweiten Fensters (4.1) des Drehtellers (4) ermöglichen, vertikal mit dem ersten Fenster des festen Tellers (3) ausgerichtet werden, um so dem zu frittierenden Produkt zu ermöglichen, aufgrund von Schwerkraft in freien Fall aus dem Sektor (2.1) zu gelangen.

2. Spender (1) gemäß Anspruch 1, wobei
das Antriebssystem (6) ferner eine Rotationswelle umfasst,
der erste Antriebsmechanismus (6.1) Folgendes umfasst
ein erstes Ritzel (6.1.1), das dazu konfiguriert ist, mechanisch mit dem Antriebsgebiet (2.2) zusammenzuwirken, und
eine erste Freilaufbuchse (6.1.2), die in das erste Ritzel (6.1.1) eingepasst und dazu konfiguriert ist, mit der Rotationswelle gekoppelt und von ihr entkoppelt zu werden, und
der zweite Antriebsmechanismus (6.2) Folgendes umfasst
ein zweites Ritzel (6.2.1), das dazu konfiguriert ist, mechanisch mit dem Drehteller (4) zusammenzuwirken, und
eine zweite Freilaufbuchse (6.2.2), die in das zweite Ritzel (6.2.1) eingepasst und dazu konfiguriert ist, mit der Rotationswelle gekoppelt und von ihr entkoppelt zu werden, und wobei
wenn das Antriebssystem (6) in der ersten Rotationsrichtung rotiert,
die Rotationswelle in der ersten Rotationsrichtung rotiert,
die erste Freilaufbuchse (6.1.2) mit der Rotationswelle gekoppelt ist, wodurch Rotation des ersten Ritzels (6.1.1) ermöglicht wird, das seinerseits das mit dem Trichter (2) gekoppelte Antriebsgebiet (2.2) rotiert, und
die zweite Freilaufbuchse (6.2.2) von der Rotationswelle entkoppelt ist, wodurch Rotation des zweiten Ritzels (6.2.1) verhindert wird, und
wenn das Antriebssystem (6) in der zweiten Rotationsrichtung rotiert,
die Rotationswelle in der zweiten Rotationsrichtung rotiert,
die erste Freilaufbuchse (6.1.2) von der Rotationswelle entkoppelt ist, wodurch Rotation des ersten Ritzels (6.1.1) verhindert wird, und
die zweite Freilaufbuchse (6.2.2) mit der Rotationswelle gekoppelt ist, wodurch Rotation des zweiten Ritzels (6.2.1) ermöglicht wird, das seinerseits den Drehteller (4) rotiert.

3. Spender (1) gemäß einem der vorangehenden Ansprüche, ferner umfassend ein Gehäuse (5), das dazu konfiguriert und bemessen ist, den ersten Antriebsmechanismus (6.1), den zweiten Antriebsmechanismus (6.2), den Drehteller (4), den festen Teller (3) und teilweise das Antriebsgebiet (2.2) zu beherbergen; wobei das Gehäuse (5) eine Basis (5.2) umfasst, der seinerseits ein drittes Fenster (5.1) umfasst, das vertikal mit dem ersten Fenster (3.1) des festen Tellers (3) ausgerichtet ist.

4. Spender (1) gemäß einem der vorangehenden Ansprüche, wobei die Dimensionen der Öffnungen (2.1.1) der mindestens zwei Sektoren (2.1) des Trichters (2), der mindestens zwei Hohlräume (2.2.1) des Antriebsgebiets (2.2), des ersten Fensters (3.1) des festen Tellers (3), des zweiten Fensters (4.1) des Drehtellers (4) und, falls vorhanden, des dritten Fensters (5.1) des Gehäuses (5) im Wesentlichen gleich sind.

5. Spender (1) gemäß einem der vorangehenden Ansprüche, ferner umfassend mindestens einen Positionssensor (7) für die korrekte vertikale Ausrichtung einer Öffnung (2.1.1) eines der Sektoren (2.1) des Trichters (2) und des zweiten Fensters (4.1) des Drehtellers (4) mit dem ersten Fenster (3.1) des festen Tellers (3).

6. Spender (1) gemäß dem vorangehenden Anspruch, wobei der mindestens eine Positionssensor (7) folgendermaßen angeordnet ist:
- in mindestens einem der mindestens zwei Sektoren (2.1) des Trichters (2); und/oder
- in der Nähe des mindestens einen zweiten Fensters (4.1) des Drehtellers (4).

7. Spender (1) gemäß einem der vorangehenden Ansprüche, wobei die Anzahl von zweiten Fenstern (4.1) des Drehtellers (4) gleich der Hälfte der Anzahl von Sektoren (2.1) des Trichters (2) ist.

8. Spender (1) gemäß einem der vorangehenden Ansprüche, wobei
der Trichter (2) eine zylindrische Basis umfasst, und
das Antriebsgebiet (2.2), der feste Teller (3), der Drehteller (4) und, falls vorhanden, die Basis (5.2) des Gehäuses (5) kreisförmig sind, wobei der Durchmesser der Teller (3, 4) und der Basis (5.2) des Gehäuses (5) im Wesentlichen gleich dem Durchmesser der zylindrischen Basis des Trichters (2) ist.

9. Spender (1) gemäß einem der vorangehenden Ansprüche, wobei das Antriebsgebiet (2.2) des Trichters (2) ein kreisförmiger Teller mit einem gezahnten Umfang ist.

10. Spender (1) gemäß einem der vorangehenden Ansprüche, wobei der Umfang des Drehtellers (4) gezahnt ist.

11. Spender (1) gemäß einem der vorangehenden Ansprüche, wobei mindestens einer der Sektoren (2.1) des Trichters (2) mindestens eine Wägezelle umfasst, die mit den Steuermitteln verbunden ist, wobei die Steuermittel ferner dazu konfiguriert sind, bei aktiviertem Antriebssystem (6) zu detektieren, ob sich das Gewicht des Inhalts in dem Sektor (3) des Trichters (2) um einen Betrag verringert, der gleich oder größer als ein erstes gegebenes Gewicht ist, wobei in diesem Fall die Steuermittel das Antriebssystem (6) deaktivieren.

12. Spender (1) gemäß einem der vorangehenden Ansprüche, wobei der Trichter (2) ein gekühlter Trichter ist.

13. Spender (1) gemäß einem der vorangehenden Ansprüche, wobei jeder Sektor (2.1) des Trichters (2) ein maximales Volumen an zu frittierendem Produkt umfasst, wobei das Volumen für alle Sektoren (2.1) im Wesentlichen gleich ist.

14. Spender (1) gemäß einem der vorangehenden Ansprüche, wobei das Antriebssystem (6) einen elektrischen Motor umfasst.

15. Frittiermaschine (8), umfassend einen Spender (1) für die kontinuierliche Beschickung von Frittiermaschinen gemäß einem der Ansprüche 1 bis 14.

## Revendications

1. Distributeur (1) pour l'alimentation continue de machines à frire comportant :
- une trémie rotative (2) comportant à son tour au moins deux secteurs (2.1), chaque secteur (2.1) étant configuré pour stocker dans celui-ci un produit à frire et comportant une première ouverture (2.1.1) au fond de celui-ci,
- une zone d'actionnement (2.2) couplée à la trémie (2) d'une manière découplable et configurée pour recevoir un mouvement qui entraîne la rotation de ladite trémie (2), la zone d'actionnement (2.2) comportant au moins deux cavités (2.2.1) verticalement alignées avec les ouvertures (2.1.1) des au moins deux secteurs (2.1) de la trémie (2),
- une plaque fixe (3) positionnée au voisinage de la zone d'actionnement (2.2), la plaque fixe (3) comportant une première fenêtre (3.1),
- des moyens de commande,
**caractérisé en ce qu'**il comporte en outre :
- une plaque rotative (4) positionnée au voisinage de la plaque fixe (3), la plaque rotative (4) étant configurée pour recevoir un mouvement qui entraîne sa rotation et comportant au moins une deuxième fenêtre (4.1),
- un système d'actionnement (6) configuré pour faire tourner les moyens de commande et relié à ceux-ci, lesquels moyens de commande comportent à leur tour :
∘ un premier mécanisme d'actionnement (6.1) configuré pour coopérer mécaniquement avec la zone d'actionnement (2.2), et
∘ un second mécanisme d'actionnement (6.2) configuré pour coopérer mécaniquement avec la plaque rotative (4), et
dans lequel les moyens de commande sont configurés pour activer le système d'actionnement (6) en entraînant la rotation de celui-ci dans un premier sens et dans un second sens de rotation, de telle sorte que
lorsqu'une rotation dans le premier sens de rotation est provoquée, le premier mécanisme d'actionnement (6.1) incite à une rotation de la zone d'actionnement (2.1) et de la trémie (2), et
lorsqu'une rotation dans le second sens de rotation est provoquée, opposé au premier sens de rotation, le second mécanisme d'actionnement (6.2) incite à une rotation de la plaque rotative (4), et dans lequel
les rotations de la zone d'actionnement (2.2), de la trémie (2) et de la plaque rotative (4) permettent à l'ouverture (2.1.1) d'un des secteurs (2.1) de la trémie (2), à l'une des cavités (2.2.1) de la zone d'actionnement (2.2) et à une des au moins une deuxième fenêtre (4.1) de la plaque rotative (4) d'être verticalement alignées avec la première fenêtre de la plaque fixe (3) de manière à permettre au produit à frire de tomber en chute libre à partir dudit secteur (2.1) en raison de la pesanteur.

2. Distributeur (1) selon la revendication 1, dans lequel
le système d'actionnement (6) comporte en outre un axe de rotation,
le premier mécanisme d'actionnement (6.1) comporte
un premier pignon (6.1.1) configuré pour coopérer mécaniquement avec la zone d'actionnement (2.2), et
une première douille de roue libre (6.1.2) insérée dans le premier pignon (6.1.1) et configurée pour être couplée à l'axe de rotation et découplée de celui-ci, et
le second mécanisme d'actionnement (6.2) comporte
un second pignon (6.2.1) configuré pour coopérer mécaniquement avec la plaque rotative (4), et
une seconde douille de roue libre (6.2.2) insérée dans le second pignon (6.2.1) et configurée pour être couplée à l'axe de rotation et découplée de celui-ci, et dans lequel
lorsque le système d'actionnement (6) tourne dans le premier sens de rotation, l'axe de rotation tourne dans le premier sens de rotation,
la première douille de roue libre (6.1.2) est couplée à l'axe de rotation, en permettant une rotation du premier pignon (6.1.1), qui fait à son tour tourner la zone d'actionnement (2.2) couplée à la trémie (2), et
la seconde douille de roue libre (6.2.2) est découplée de l'axe de rotation en empêchant une rotation du second pignon (6.2.1), et
lorsque le système d'actionnement (6) tourne dans le second sens de rotation, l'axe de rotation tourne dans le second sens de rotation,
la première douille de roue libre (6.1.2) est découplée de l'axe de rotation en empêchant une rotation du premier pignon (6.1.1), et
la seconde douille de roue libre (6.2.2) est couplée à l'axe de rotation en permettant une rotation du second pignon (6.2.1) qui fait tourner à son tour la plaque rotative (4).

3. Distributeur (1) selon l'une quelconque des revendications précédentes, comportant en outre un carter (5) configuré et dimensionné pour recevoir le premier mécanisme d'actionnement (6.1), le second mécanisme d'actionnement (6.2), la plaque rotative (4), la plaque fixe (3) et, en partie, la zone d'actionnement (2.2), le carter (5) comportant une base (5.2) qui comporte à son tour une troisième fenêtre (5.1) verticalement alignée avec la première fenêtre (3.1) de la plaque fixe (3).

4. Distributeur (1) selon l'une quelconque des revendications précédentes, dans lequel les dimensions des ouvertures (2.1.1) des au moins deux secteurs (2.1) de la trémie (2), des au moins deux cavités (2.2.1) de la zone d'actionnement (2.2), de la première fenêtre (3.1) de la plaque fixe (3), de la deuxième fenêtre (4.1) de la plaque rotative (4) et, s'il y en a une, de la troisième fenêtre (5.1) du carter (5), sont sensiblement identiques.

5. Distributeur (1) selon l'une quelconque des revendications précédentes, comportant en outre au moins un capteur de position (7) pour l'alignement vertical correct d'une ouverture (2.1.1) d'un des secteurs (2.1) de la trémie (2) et de la deuxième fenêtre (4.1) de la plaque rotative (4) avec la première fenêtre (3.1) de la plaque fixe (3).

6. Distributeur (1) selon la revendication précédente, dans lequel le au moins un capteur de position (7) est positionné :
- dans au moins un des au moins deux secteurs (2.1) de la trémie (2), et/ou
- au voisinage de la au moins une deuxième fenêtre (4.1) de la plaque rotative (4).

7. Distributeur (1) selon l'une quelconque des revendications précédentes, dans lequel le nombre de deuxièmes fenêtres (4.1) de la plaque rotative (4) est égal à la moitié du nombre de secteurs (2.1) de la trémie (2).

8. Distributeur (1) selon l'une quelconque des revendications précédentes, dans lequel
la trémie (2) comporte une base cylindrique, et
la zone d'actionnement (2.2), la plaque fixe (3), la plaque rotative (4) et, s'il y en a une, la base (5.2) du carter (5), sont circulaires, le diamètre desdites plaques (3, 4) et de ladite base (5.2) du carter (5) étant sensiblement égal au diamètre de la base cylindrique de la trémie (2).

9. Distributeur (1) selon l'une quelconque des revendications précédentes, dans lequel la zone d'actionnement (2.2) de la trémie (2) est une plaque circulaire ayant un périmètre denté.

10. Distributeur (1) selon l'une quelconque des revendications précédentes, dans lequel le périmètre de la plaque rotative (4) est denté.

11. Distributeur (1) selon l'une quelconque des revendications précédentes, dans lequel au moins un des secteurs (2.1) de la trémie (2) comporte au moins une cellule de charge reliée aux moyens de commande, les moyens de commande étant en outre configurés pour détecter, lorsque le système d'actionnement (6) est activé, si le poids du contenu dans ledit secteur (3) de la trémie (2) diminue d'une quantité égale ou supérieure à un premier poids donné, auquel cas les moyens de commande désactivent le système d'actionnement (6).

12. Distributeur (1) selon l'une quelconque des revendications précédentes, dans lequel la trémie (2) est une trémie réfrigérée.

13. Distributeur (1) selon l'une quelconque des revendications précédentes, dans lequel chaque secteur (2.1) de la trémie (2) comporte un volume maximal de produit à frire, ledit volume étant sensiblement identique pour tous les secteurs (2.1).

14. Distributeur (1) selon l'une quelconque des revendications précédentes, dans lequel le système d'actionnement (6) comporte un moteur électrique.

15. Machine à frire (8) comportant un distributeur (1) pour l'alimentation continue de machines à frire selon l'une quelconque des revendications 1 à 14.
